# EUROPEAN PATENT SPECIFICATION

(11) **EP 3 383 606 B1**
(45) Date of publication and mention of the grant of the patent: **03.03.2021**
(21) Application number: 16775077.7
(22) Date of filing: 13.09.2016
(51) Int. Cl.: B28B 1/52, C04B 28/14, C04B 28/16, C04B 111/52

(54) **METHOD FOR MANUFACTURING A GYPSUM FIBRE BOARD AND SOUND-ABSORBING GYPSUM FIBRE BOARD PRODUCED BY SAID METHOD**
VERFAHREN ZUR HERSTELLUNG EINER GIPSFASERPLATTE UND DARAUS HERGESTELLTE SCHALLABSORBIERENDE GIPSFASERPLATTE
PROCÉDÉ DE FABRICATION D'UN PANNEAU DE FIBRES DE GYPSE INSONORISANT ET PANNEAU DE FIBRES DE GYPSE PRODUIT PAR LEDIT PROCÉDÉ

(30) Priority: 30.11.2015 DE 102015015299
(43) Date of publication of application: 10.10.2018
(73) Proprietor: Knauf Gips KG, 97346 Iphofen (DE)
(72) Inventor: BURCZECK, Jürgen, 97340 Segnitz (DE); TSVETANOV, Vladimir Stefanov, 3700 Vidin (BG); IVANOVA-TSANEVA, Vanya Stancheva, 3700 Vidin (BG); VLAHOV, Ventzislav, 1220 Sofia (BG); AMZOVA, Elizabeta, 3700 Vidin (BG)
(86) International application number: PCT/EP2016/001540
(87) International publication number: WO 2017/092838

(56) References cited:
- EP-A1- 0 943 591
- WO-A1-2014/207098
- WO-A1-2016/101968
- DE-A1- 19 912 847
- DE-C1- 4 232 760
- US-A- 4 233 368

## Description

The invention relates to a method for manufacturing a gypsum fibre board with good sound-absorbing properties as well as a sound-absorbing gypsum fibre board produced by the method.

There are various methods for manufacturing gypsum fibre boards. A known method is the so-called Siempelkamp method, also called a dry method. A dry mixture of fibrous stucco gypsum (β-semi-hydrate) is evenly applied to a continuous filter belt and wetted with surplus water, i.e. with a larger amount of water than is needed for setting the gypsum. The surplus water is sucked into the fibrous stucco gypsum mixture by way of applying a vacuum. For manufacturing reasons the wetting process must be completed within a minimum of time.

The wetted fibre mixture is then pressed in a continuous press to form a continuous strip of boards and subsequently separated into appropriately sized panels. A large proportion of the water remaining in the string of boards reacts with the stucco gypsum thereby setting to form plaster. After setting the boards are dried and passed onto the finishing process (grinding, further separation, stacking etc.).

WO 2014/207098 A1 discloses a dry method for manufacturing a gypsum fibre board, wherein a dry mixture of stucco and cellulosic fibres (old paper) is processed.

The board raw density is dependent on the mass/dumping height of the fibrous stucco mixture placed on the filter belt, and on the height of the pressing force applied. Furthermore the board raw density can be increased by using a lesser proportion of fibres. In this way the board raw density can be adjusted as required to values of approx. 1000 kg/m³ to 1550 kg/m³.

For an increase in the raw density of the boards the sound-absorbing properties, as a rule, also increase. But as the raw density increases, so does the hardness and brittleness of the boards, whilst its flexibility decreases.

Gypsum fibre boards with good sound-insulation properties are therefore difficult to process, due to their high degree of hardness and brittleness. They easily break, and the edges and corners tear when being fastened by screwing and the screw holes break out.

It is therefore the requirement of the invention to propose a gypsum fibre board of the kind mentioned, which comprises good sound-insulation properties, but nevertheless does not cause any problems during processing. In addition a method, in particular a dry method for manufacturing such boards is to be proposed.

This requirement is met by a gypsum fibre board with the characteristics according to claims 5 and 6. and a method for manufacturing a gypsum fibre board according to claim 1.

Accordingly a sound-absorbing gypsum fibre board comprises between 45 and 85 %-by-weight calcium sulphate dihydrate, between 5 and 15 %-by-weight fibres and between 10 and 40 %-by-weight of an inert material with an average grain size (d50) smaller than 1 mm. Preferably the average grain size is between 10 µm and 1 mm. The grain size of the inert material is determined by means of the linear intercept method.

A sound-absorbing gypsum fibre board in terms of this invention is understood to be a gypsum fibre board, which for a thickness of 12.5 mm comprises a weighted sound reduction index R_{w} of at least 30 dB, preferably of at least 32 dB. An inert material is a material which during the manufacturing process when setting the gypsum, is essentially not integrated into the gypsum matrix or integrated reactively to a maximum of 50%, preferably max. 30% or especially preferably max. 10%. This results in a structure, which is less solidly interlocked and bonded, and therefore retains more flexibility in bending, but without the board losing in mass and thus losing any of its sound-absorbing properties.

By using an inert material, which comprises an average grain size of less than 1 mm, it is ensured that dehydration of the gypsum fibre "carpet" by means of vacuum suction is not disturbed and that the settable material in the carpet is evenly wetted. Since the overall amount of settable material is reduced, it is critical for the mechanical properties of the board that all of the settable material present does indeed set. Therefore the small grain size of the inert material is an important criterion of the invention.

The inert material is calcium sulfate anhydrite, dried REA-gypsum (calcium sulphate dihydrate, which is produced during desulphurisation of flue gases), another calcium sulfate dihydrate (natural gypsum) or mixtures therefrom. The inert material replaces parts of the dihydrate, which is created from β-semi-hydrate by setting. As a result, the final strength of the gypsum fibre boards is reduced and processability is improved.

According to an embodiment of the invention a part of the fibres, mostly waste paper fibres, could be replaced by fibres from strong tissue paper (Kraft paper), a sturdy paper with high tensile strength. The higher strength of these fibres improves processability of the board material and in particular prevents the screw holes from breaking out the edges. The proportion of strong tissue paper fibres may be up to 40 %-by-weight of the total amount of fibres.

For the same reason it is possible to replace a part of the fibres by cut glass fibres. Preferably up to 4 % by weight, particularly preferably up of 1.5 %-by-weight of the total amount of fibres consist of cut glass fibres.

All above-described embodiments can be combined with each other at random.

A method according to the invention for the manufacture of a gypsum fibre board is a dry method. A dry mixture of between 45 and 85 % -by-weight β-semi-hydrate, between 5 and 15 %-by-weight fibres and between 10 and 40 %-by-weight of an inert material and applied as a dry carpet onto a conveyor system, the dry carpet is wetted with water, pressed to form a continuous strip, separated into individual boards and the boards are then dried, wherein the inert material comprises an average grain size of less than 1 mm, determined according to a linear intercept method characterised in that the inert material is a calcium sulfate anhydrite, a REA gypsum, another calcium sulfate dihydrate or mixtures therefrom.

All other features corresponding to the above-described measures refer to the components of the dry carpet. Reference should be made to what is described above.

## Claims

1. A method for manufacturing a sound-absorbing gypsum fibre board, comprising a dry process, wherein a dry mixture is manufactured from between 45 and 85 %-by-weight β-semi-hydrate, between 5 and 15 %-by-weight fibres and between 10 and 40 %-by-weight of an inert material and applied as a dry carpet onto a conveyor system, the dry carpet is wetted with water, pressed to form a continuous strip, separated into individual boards and the boards are then dried, wherein the inert material comprises an average grain size of less than 1 mm, determined according to a linear intercept method **characterised in that** the inert material is a calcium sulfate anhydrite, a REA gypsum, another calcium sulfate dihydrate or mixtures therefrom.

2. The method according to claim 1, **characterised in that** the fibres are waste paper fibres.

3. The method according to claims 1 or 2, **characterised in that** up to 40 %-by-weight of the fibre quantity consist of strong tissue paper fibres.

4. The method according to one of claims 1 to 3, **characterised in that** up to 4 %-by-weight, preferably up to 1.5 %-by-weight of the fibre quantity consist of cut glass fibres.

5. A sound-absorbing gypsum fibre board produced by the method according to one of the previous claims 1 to 4.

6. The gypsum fibre board according to claim 5, **characterised in that** it comprises a weighted sound reduction index R_{w} of at least 30 dB for a board thickness of 12.5 mm.

## Patentansprüche

1. Verfahren zum Herstellen einer schallabsorbierenden Gipsfaserplatte, das einen Trockenvorgang umfasst, wobei eine Trockenmischung aus zwischen 45 und 85 Gew.-% β-Halbhydrat, zwischen 5 und 15 Gew.-% Fasern und zwischen 10 und 40 Gew.-% eines inerten Materials hergestellt und als ein Trockenteppich auf ein Fördersystem aufgebracht wird, wobei der Trockenteppich mit Wasser benetzt, gepresst, um einen fortlaufenden Streifen auszubilden, und in einzelne Platten getrennt wird und die Platten dann getrocknet werden, wobei das inerte Material eine durchschnittliche Korngröße von weniger als 1 mm, bestimmt nach einem linearen Schnittverfahren, umfasst, **dadurch gekennzeichnet, dass** das inerte Material ein Calciumsulfatanhydrit, ein REA-Gips, ein anderes Calciumsulfatdihydrat oder Mischungen davon ist.

2. Verfahren nach Anspruch 1, **dadurch gekennzeichnet, dass** die Fasern Altpapierfasern sind.

3. Verfahren nach den Ansprüchen 1 oder 2, **dadurch gekennzeichnet, dass** bis zu 40 Gew.-% der Fasermenge aus starken Seidenpapierfasern bestehen.

4. Verfahren nach einem der Ansprüche 1 bis 3, **dadurch gekennzeichnet, dass** bis zu 4 Gew.-%, vorzugsweise bis zu 1,5 Gew.-% der Fasermenge aus geschliffenen Glasfasern bestehen.

5. Schallabsorbierende Gipsfaserplatte, die durch das Verfahren nach einem der vorhergehenden Ansprüche 1 bis 4 hergestellt wird.

6. Gipsfaserplatte nach Anspruch 5, **dadurch gekennzeichnet, dass** sie einen gewichteten Schallminderungsindex R_{w} von wenigstens 30 dB bei einer Plattendicke von 12,5 mm umfasst.

## Revendications

1. Procédé de fabrication d'un panneau de fibres de gypse insonorisant, comprenant un procédé à sec, dans lequel un mélange sec est fabriqué à partir de 45 à 85 % en poids de semi-hydrate β, entre 5 et 15 % en poids de fibres, et entre 10 et 40 % en poids d'un matériau inerte et appliqué sous forme de tapis sec sur un système de transport, le tapis sec est humidifié avec de l'eau, pressé pour former une bande continue, séparé en panneaux individuels et les panneaux sont ensuite séchés, le matériau inerte comprenant une taille de grain moyenne inférieure à 1 mm, déterminée selon une méthode d'interception linéaire **caractérisée en ce que** le matériau inerte est un sulfate de calcium anhydre, un gypse REA, un autre sulfate de calcium dihydrate ou des mélanges de ceux-ci.

2. Procédé selon la revendication 1, **caractérisé en ce que** les fibres sont des fibres de vieux papiers.

3. Procédé selon les revendications 1 ou 2, **caractérisé en ce que** jusqu'à 40 % en poids de la quantité de fibres est constitué de fibres de papier mince résistantes.

4. Procédé selon l'une des revendications 1 à 3, **caractérisé en ce que** jusqu'à 4 % en poids, de préférence jusqu'à 1,5 % en poids de la quantité de fibres est constitué de fibres de verre coupées.

5. Panneau de fibres de gypse insonorisant produit par le procédé selon l'une des revendications 1 à 4 précédentes.

6. Panneau de fibres de gypse selon la revendication 5, **caractérisé en ce qu'**il comprend un indice de réduction sonore pondéré R_{w} d'au moins 30 dB pour une épaisseur de panneau de 12,5 mm.
